# EUROPEAN PATENT APPLICATION

(11) **EP 2 490 055 A1**
(43) Date of publication of application: **22.08.2012**
(21) Application number: 12154314.4
(22) Date of filing: 07.02.2012
(51) Int. Cl.: G02B 6/25

(54) **Device and method for inserting an optical fiber in equipment for optical fiber processing**

(30) Priority: 17.02.2011 US 201161443942 P
(71) Applicant: Tyco Electronics Raychem BVBA, 3010 Kessel-Lo (BE)
(72) Inventor: Wolbers, Martijn Johannes, 7558 HE Hengelo (NL); Hilderink, André Johannes Maria, 7481 CE Haaksbergen (NL); Krechting, Petrus Theodorus, 7532 AJ Enschede (NL); Van Assenbergh, Karel Johannes, 49767 Twist (DE); Rutgers, Petrus Theodorus, 7556 BW Hengelo (NL)
(74) Representative: Bird Goën & Co

(57) **Abstract**

The present invention provides a device and method for inserting an optical fiber, wherein the optical fiber has a fiber axis, in an equipment for optical fiber processing, the device comprising guiding means, whereby the device is adapted to move a tape, wherein said guiding means are adapted to draw the tape to feed the optical fiber with the tape and to sandwich the optical fiber in the tape with the movement of the tape, wherein the movement speed of the tape is higher than an insertion speed of the optical fiber.

## Description

### TECHNICAL FIELD

The present invention relates to a device and a method for inserting an optical fiber in equipment such as for optical fiber processing. The equipment can be adapted to perform an operation on the optical fiber, such as a stripping operation, a cleaning operation, or a cleaving operation.

More specifically, the optical fiber can be guided into the equipment for optical fiber processing by using a tape, whereby the optical fiber is sandwiched between the tape with the movement of the tape.

### BACKGROUND

Modern optical devices and optical communications systems widely use fiber optic cables. Optical fibers are strands of glass fiber processed so that light beams transmitted through the glass fiber are subject to total internal reflection so that a large fraction of the incident intensity of light directed into the fiber is received at the other end of the fiber.

Optical fibers usually have one or more coatings, for example a polymer coating made of acrylate or polyimide, to protect the surface of the fiber from chemical or mechanical damage. Several operations may be performed on the optical fibers that generate debris from the optical fibers.

These operations are performed e.g. to manufacture optical devices such as optical sensors and other optical communications network components. A first operation can be for instance to remove the coating or coatings at an end of the optical fiber, so that a bare end is obtained; this operation is known as stripping. After the stripping operation, the stripped end of the optical fiber may be cleaned to remove any remaining coating debris. The stripped end may then be cleaved to obtain a well-defined end face.

Cleaving also generates debris, namely the cleaved end portion of the optical fiber.

In addition when using equipment for optical fiber processing and applying one or more of the above mentioned operations a wiping cloth can be used for instance to clean the optical fiber. US 5253412 discloses a tip processing apparatus for jacketed optical fibers. The coating at the end of the optical fiber is removed and kept on the tip of the fiber. In a subsequent stage, two tapes of wiping cloth, positioned at opposite sides of the stripped fiber, are used to clean the fiber from remaining stripping debris. The wiping cloth is moistened with alcohol. US 5117528 discloses a processing apparatus to microscopically clean the ferrule end surface of an optical connector whereby the optical connector cleaner comprises a cleaning cloth woven with ultrafine fiber.

### SUMMARY OF THE INVENTION

A need still exists for an improved device and method for inserting an optical fiber in equipment for optical fiber processing.

An object of the invention is to provide alternative devices and/or methods for inserting an optical fiber in equipment for optical fiber processing, whereby the equipment is adapted to perform an operation on the optical fiber, such as a stripping operation, a cleaning operation, or a cleaving operation.

An advantage of embodiments of the present invention can be that the optical fiber is guided in a protected manner into the equipment for optical fiber processing by using a tape, whereby the optical fiber is sandwiched between the tape with the movement of the tape. Another advantage of embodiments of the present invention can be that the optical fiber can be pre-aligned before processing. As a result one or more deficiencies and problems associated with the prior art devices and methods are eliminated or reduced by the devices and methods disclosed herein.

Embodiments of the present invention provide an alternative device and method for inserting an optical fiber in equipment for optical fiber processing e.g. such as a stripping operation, a cleaning operation, a cleaving operation. Embodiments of the herein disclosed devices and methods for inserting an optical fiber in equipment for optical fiber processing are reliable and convenient. Further, the disclosed device or method is particularly suitable to be integrated into an automated tool. Preferably, the optical fiber is inserted in such a way that the equipment and its internal mechanisms can apply the operations described in a correct way as a result of a guiding operation applied on the optical fiber by using tape, which is especially advantageous in an automated tool.

The invention provides in one embodiment a device for inserting an optical fiber, wherein the optical fiber has a fiber axis, in an equipment for optical fiber processing, the device comprising guiding means, whereby the device is adapted to move a tape, wherein said guiding means are adapted to draw the tape to feed the optical fiber with the tape and to sandwich the optical fiber in the tape with the movement of the tape. The optical fiber is thus guided and pre-aligned, by a drawing motion, using the tape in the form of a tape sandwich, in a reliable and convenient way. Preferably the drawing motion is provided by a difference between the movement velocity of the tape and an insertion velocity of the fiber. More specifically the movement speed of the tape is higher than the insertion speed of the fiber which typically is between 5 to 20 mm/s more specifically 10 mm/s. In preferred embodiments the movement speed of the tape is 5-10% higher than the insertion velocity of the optical fiber.

Advantageously as a result of the above described drawing motion the tape guides the optical fiber and the optical fiber is automatically aligned, e.g. straightened. As a result, when performing an optical fiber processing operation the optical fiber is in a correct position. This straightening will improve the quality of the operation performed resulting in optical fiber with a better performance.

In an alternative embodiment, the device can further comprise a second guiding means and whereby the device is adapted to move a second tape, wherein said first and second guiding means are adapted to draw the tape to feed the optical fiber between the first and second tapes and to sandwich the optical fiber between the first and second tapes with the movement of the first and second tapes. According to one aspect of the invention, the device comprises a tape cartridge comprising, besides one or two guiding elements respectively one or two tapes. Preferably, the tape cartridge can easily be exchanged and the tape is disposable. The tape is designed for cheapness and short-term convenience and preferably intended for single use. According to another aspect of the invention, the device includes, besides the guiding elements, an element to receive a tape cartridge. According to yet another aspect of the invention, the device functions without a tape cartridge; the tapes may e.g. be mounted in the device as tape rollers.

In some embodiments, the device for inserting an optical fiber includes a driving element for driving a tape. The driving element may be adapted for evacuating the tape. Guiding element(s) for the tape may be provided in the device and/or in a tape cartridge configured to co-operate with the device. The driving element and/or the guiding element(s) may be adapted for driving the tape, and the guiding elements for guiding and folding the tape.

The device for inserting an optical fiber may include one or more systems to perform an operation that generates debris from the optical fiber. The device may include a system for performing debris generating operation such as a stripping operation, and/or a system for performing a cleaning operation, and/or a system for performing a cleaving operation.

### Definitions

The term "fiber" as used herein relates to a single optical transmission element having a core having e.g. a diameter in the range from 8 to 10 µm, e.g. a diameter of 8 µm, and a cladding with e.g. a diameter in the range from 124 to 126 µm, e.g. a diameter of 125 µm, wherein the core is the central, light-transmitting region of the fiber, and the cladding is the material surrounding the core to form a guiding structure for light propagation within the core. The dimensions may of course be different; for multimode fibers, a core diameter of 50 µm or of 62.5 µm is most common. The core and cladding can be coated with a primary coating usually comprising one or more organic or polymer layers surrounding the cladding to provide mechanical and environmental protection to the light-transmitting region. The primary coating may have a diameter ranging e.g. between 200 and 300 µm. The core, cladding and primary coating usually are coated with a secondary coating, a so-called "buffer", a protective polymer layer without optical properties applied over the primary coating. The buffer or secondary coating usually has a diameter ranging between 300-1100 µm, depending on the cable manufacturer.

If all the coatings are removed at the end of the fiber over a certain length, so that only the core and cladding remain bare, the end of the fiber is "bare" as this is called in this document.

The term "stripping" as used herein relates to removing a coating from the optical transmission element.

The term "evacuate" as used herein relates to remove securely waste matter from the optical fiber so that the debris may not recontaminate the fiber.

The terms "automatically", "automatic", "automated" relate to a system or a method without manual intervention. Such an automatic system self-activates or is executed under programmed or specified conditions and performs specified functions. Moreover the execution is performed in a manner essentially independent of external influence or control.

### BRIEF DESCRIPTION OF THE DRAWINGS

Further features of the present invention will become apparent from the embodiments, examples and figures, wherein:
Figs. 1a-1c illustrate embodiments of the invention wherein a single tape is used.
Fig. 2 illustrates axial tape transport according to embodiments of the invention;
Fig. 3 shows an embodiment of a tape cartridge;

### DESCRIPTION OF EMBODIMENTS

Below, embodiments will be referred to in detail, examples of which are illustrated in the drawings.

The present invention is not limited to the described embodiments, but is limited only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated. The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is moreover to be understood that, in case parameter ranges are given which are delimited by numeric values, the ranges are deemed to include these limitation values, unless stated otherwise.

In the drawings, like reference numerals indicate like features; and a reference numeral appearing in more than one figure refers to the same element.

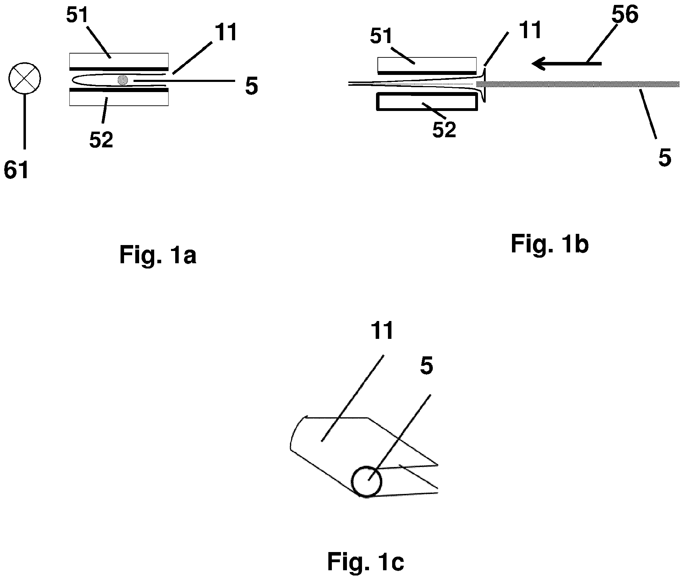

Fig. 1a, 1b and 1c illustrate a first tape arrangement for use with a station where the optical fiber comprises or generates debris, e.g. with or after a debris forming station in accordance with an embodiment of the present invention. For example, one tape 11 can be used so that the optical fiber is inserted between two folded portions of the one tape 11. The station is adapted to form a tape sandwich, whereby the sandwich is formed by folding two portions of one tape 11 around the tape's longitudinal axis. To achieve this, the tape resides between two clamps 51, 52 so that it folds over on itself longitudinally to thereby form a sandwich. The folding is initiated just as the tape enters between the two clamps, at the same position where the fiber is being engaged and drawn into the tape sandwich and between the two pads.. Preferably, the optical fiber is guided in a direction 61 by a drawing motion, between the tape, in a form of a tape sandwich, whereby the drawing motion is provided by a difference between the movement velocity of the tape and an insertion velocity of the fiber. The movement speed of the tape is higher than the insertion speed of the fiber which typically is between 5 to 20 mm/s more specifically 10 mm/s. In preferred embodiments the movement speed of the tape is 5-10% higher than the insertion speed of the optical fiber. As a result of the difference in velocity the optical fiber is drawn in the center of tape, i.e. the fiber is aligned such that eccentricity is prevented of the optical fiber with respect to both horizontal and vertical axis.

The tape material preferably has high strength and good resistance to temperature up to e.g. 180 °C. Further it preferably has a low coefficient of friction with respect to glass, preventing high clamping forces on the fiber after the stripping operation. Tape of nonwoven materials may be used, such as lens cleaning tissue. The tape may also have markers which are used to wind the tape over the right distance and indicate the end of the tape. The tape may be carried in a cartridge that can be wider than the tape. Preferably the tape has a width between 10 to 15 mm. The first and/or second tape 11 or 21 in some embodiments of the invention has sticky or adhesive zones for contacting the other tape 21 or 11. One of both tapes may be sticky or have adhesive capability (e.g. inherently or from a coating) over its entire surface facing the other tapes, or it may just comprise sticky or adhesive zones. Preferably, one tape has sticky or adhesive zones and the other tape has not. This helps in trapping the debris 41, and in forming the sandwich 31. In addition, when using a single tape and/or second tape in some embodiments of the invention, to protect the fiber when using a heater, a tape comprising no sticky or adhesive zones can be used. The heat produced by the heater preferably generates the sticky behavior of the tape which helps the trapping of the debris. In an alternative embodiment, the tape can comprise zones with adhesives, whereby said adhesives become sticky after heat activation, thus the heat activated tape remains usually tack-free until it is activated by a heat source.

In other embodiments the first or second tape may comprise zones which are embossed, whereby said embossed zones are adapted to cover perforated zones of the other tape. The embossed zone of the first or second tape and the perforated zone of the other tape are positioned such that a sandwich can be formed when both tapes are aiding the trapping of the debris 41.

Other materials used as tape according to embodiments of the invention can for instance be Kapton tape, which is a polyimide film (poly[4,4'-oxydiphenylene-pyromellitimide]), and which can remain stable in a wide range of temperatures, from - 273 to +400 °C. Also different other types of tape substrates can be used such as PET (polyethylene) which can be used at lower temperatures (up to 120 °C). In addition tapes consisting of a woven textile material can be used. For instance two types that are commercially available can be used: (1) Optipop RS, which is the tape material used in the optical connector cleaner Optipop R1 produced by NTT AT, and (2) a woven textile tape material as used in ReelClean 500 optical fiber connector cleaner produced by Korean company TheFibers Inc.

Driving the first and the second tape may be performed indirectly, e.g. by driving the sandwich. In such an embodiment the one tape or the first or second tape are driven by driving the finished sandwich.

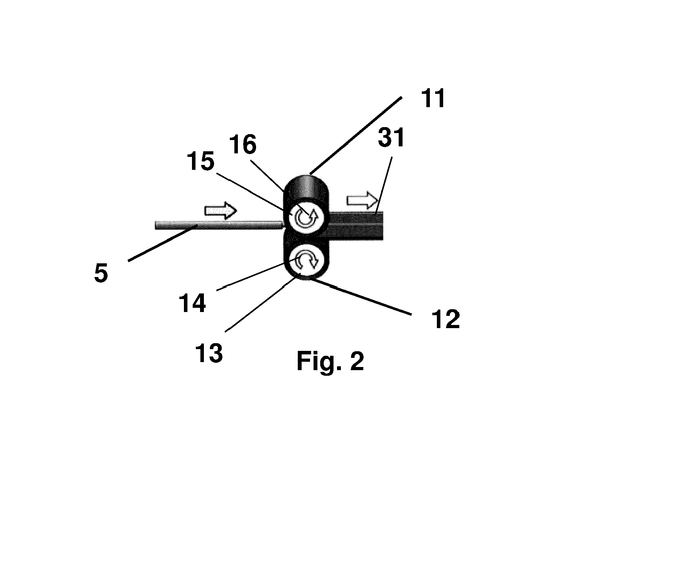

Tapes 11, 12 may be guided in a direction parallel to the axis of the optical fiber 5, as shown in Fig. 2. Guiding roller 13 is driven by a driving element 14, e.g. an electric motor, and guiding roller 15 is driven by driving element 16. Further, a sandwich 31 can be guided by at least one guiding roller and driven by driving element (not shown). The driving elements drive the guiding elements by any suitable method, e.g. the driving element may be concentric with the guiding element it drives. Preferably, the driving elements 14 and 16, which are in the embodiment of Fig. 1 do not form part of a tape cartridge (not shown), but are part of equipment used for processing optical fiber. The tape cartridge is preferably just a consumable, that comprises a first and optionally a second tape. A tape cartridge of which the tapes were used up can then easily be replaced by a new, full cartridge. Using such a tape cartridge is thus very convenient.

In another embodiment, one or more driving elements for the tape may be part of the tape cartridge. It is preferred that the tape cartridge comprises means for guiding the tapes. The path of the tapes, and the path of the sandwich, which is determined by the guiding means, is preferably such that the first 11 and the second 12 tape form a sandwich 31 immediately after the optical fiber is caught between the first and the second tape.

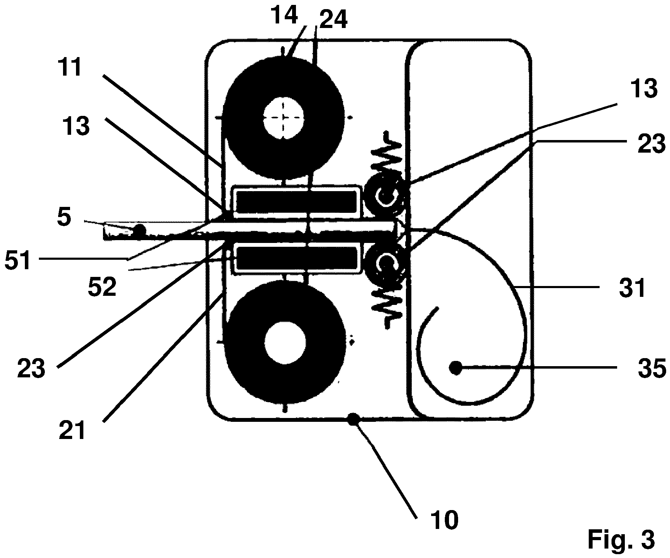

Fig. 3 schematically shows an embodiment of a tape cartridge 10 wherein the tapes 11, 12 (or tape (not shown)) are guided in a direction parallel to the axis of the optical fiber 5. The first tape is supplied on a first tape roller 14, and the second tape 21 is supplied on a second tape roller 24. Tape 11 is guided by a small guide roller 13 along the first heater 51 and then by driven guide roller 13, while tape 12 is guided by small guide roller 23 along second heater 52 and by driven guide roller 23. Heaters 51 and 52 preferably do not form part of the tape cartridge, but are part of the device wherein the tape cartridge 10 is inserted (inserting the tape cartridge 10 into the device may e.g. be done in the direction perpendicular to the plane of the drawing). In other embodiment the heaters can be substituted by another station performing a fiber processing operation, such as a cleaving or cleaning station. In another embodiment, there is no evacuation compartment 35, but sandwich 31 is evacuated through an evacuation opening in the tape cartridge, and cut into strips having e.g. a length of 10 cm, so that these strips fall on the ground when the device is operated. Afterwards, the operator of the device collects the strips as waste.

In all embodiments described above, the first and the second tape can also be identical. The single tape may be guided around the optical fiber which is inserted such that it forms a wrap, like illustrated in Fig. 1b, and that the debris is caught between two portions of the single tape facing each other and forming a sandwich. The single tape which is guided around the optical fiber then can be used a protective means as protective means when use a heater.

It is to be understood that this invention is not limited to the particular features of the means and/or the process steps of the methods described above as such means and methods may vary. It is also to be understood that the terminology used herein is for purposes of describing particular embodiments only, and is not intended to be limiting. The illustrative discussions above are not intended to be exhaustive or to limit the invention to the exact embodiments and examples that are disclosed. Many modifications and variations are possible in view of the above teachings. The embodiments above were chosen and described in order to best explain the principles of the invention and its practical applications. The invention is defined by the appended claims.

## Claims

1. Device for inserting an optical fiber, wherein the optical fiber has a fiber axis, in an equipment for optical fiber processing, the device comprising guiding means, whereby the device is adapted to move a tape, wherein said guiding means are adapted to draw the tape to feed the optical fiber with the tape and to sandwich the optical fiber in the tape with the movement of the tape, wherein the movement speed of the tape is higher than an insertion speed of the optical fiber.

2. Device according to claim 1, further comprising a second guiding means and whereby the device is adapted to move a second tape, wherein said first and second guiding means are adapted to draw the tape to feed the optical fiber between the first and second tapes and to sandwich the optical fiber between the first and second tapes with the movement of the fist and second tapes, wherein the movement speed of the first and second tapes is higher than an insertion speed of the optical fiber.

3. Device according to claim 1 or claim 2, wherein said device further comprises first driving means for driving the first tape and the second tape; or first driving means for driving the first tape and optionally second driving means for driving the second tape

4. Device according to any of claim 1 to 3, wherein said device further comprises a tape cartridge, said tape cartridge comprises said first tape and optionally said second tape.

5. Device according to any of claim 1 to 4, wherein said first guiding means is for guiding and moving the first tape in an axial direction parallel to optical fiber axis and said second guiding means is for guiding and moving the second tape in the axial direction.

6. Device according to any of claim 2 to 5, wherein the second tape has sticky or adhesive zones for contact the first tape.

7. Device according to any of claim 2 to 5, wherein the first tape has embossed zones and the other tape has perforated zones for contact with the first tape.

8. Device according to any of claim 1 to 7, wherein the movement speed of the first and optionally second tape is higher than an insertion speed of the optical fiber by 5-10%.

9. Device according to claim 8, wherein the insertion speed of the optical fiber is between 5 to 20 mm/s, more specifically 10 mm/s.

10. Method for inserting an optical fiber in equipment for optical fiber processing, the method comprising the steps of:
- driving a tape;
- drawing the optical fiber with the tape and sandwiching the optical fiber in the tape with the movement of the tape, wherein the movement speed of the tape is higher than an insertion speed of the optical fiber.

11. Method for inserting an optical fiber in equipment for optical fiber processing, the method comprising the steps of:
- driving a first and second tape;
- drawing the optical fiber between the first and second tape and sandwiching the optical fiber between the first and second tape with the movement of the first and second tapes, wherein the movement speed of the first and second tapes is higher than an insertion speed of the optical fiber.

12. Method according to claim 10 or 11 further comprising contacting the first and/or second tape by a sticky zone of the other tape.

13. Method according to claim 10 or 11 further comprising contacting a tape comprising an embossed zone to another tape comprising a perforated zone.
